# EUROPEAN PATENT APPLICATION

(11) **EP 4 852 121 A1**
(43) Date of publication of application: **09.12.2026**
(21) Application number: 25845342.2
(22) Date of filing: 28.07.2025
(51) Int. Cl.: H01M 10/0565, H01M 10/0562, H01M 10/0567

(54) **COMPOSITION FOR ION-CONDUCTIVE FILM AND BATTERY COMPRISING ION-CONDUCTIVE FILM MANUFACTURED THEREFROM**

(30) Priority: 26.07.2024 KR 20240099133
(71) Applicant: LG Chem, Ltd., Seoul 07336 (KR); Seoul National University R&DB Foundation, Seoul 08826 (KR)
(72) Inventor: LEE, Mi Sook, Seoul 07796 (KR); LEE, Jong-Chan, Seoul 08830 (KR); LEE, Ji Seok, Seoul 07796 (KR); SON, Hyun Joo, Seoul 07796 (KR); HAN, Ye Eun, Goyang-si Gyeonggi-do 10551 (KR); LEE, Seung Yoon, Sejong 30064 (KR); YOON, Jeong Ae, Seoul 07796 (KR)
(74) Representative: Hoffmann Eitle
(86) International application number: PCT/KR2025/011203
(87) International publication number: WO 2026/024157

(57) **Abstract**

The present invention relates to a composition for an ion-conducting membrane and a battery including an ion-conducting membrane prepared by the same. The composition for an ion-conducting membrane includes a phosphorus-based polymer, a compound represented by Chemical Formula 2 and a lithium salt compound, and the composition includes the polymer in an amount of 80.00 to 90.00 parts by weight with respect to 100 parts by weight of the sum of the polymer and the compound represented by Chemical Formula 2.

## Description

### [Technical Field]

### Cross-Reference to Related Application

This application claims priority to and the benefit of Korean Patent Application No. 10-2024-0099133, filed on July 26, 2024, the disclosure of which is incorporated herein by reference in its entirety.

### Technical Field

The present invention relates to a composition for an ion-conducting membrane and a battery comprising an ion-conducting membrane prepared by the same.

### [Background Art]

High-energy-density lithium secondary batteries, which are currently mainly used in laptops and smartphones, are composed of a lithium oxide-containing positive electrode, a carbon-based negative electrode, a separator and a liquid or solid electrolyte. However, lithium secondary batteries including flammable liquid electrolytes have stability issues such as leakage, ignition, and explosion, and design of the battery becomes complicated to solve these safety issues.

In order to solve the safety issues, research is being conducted on non-flammable or flame-retardant solid electrolytes, and the solid electrolytes can be classified into sulfide-based electrolytes, oxide-based electrolytes, and polymer electrolytes. Among them, the polymer electrolytes have a low cost and excellent flexibility and are easy to process.

The polymer electrolytes are largely divided into a gel type and a solid type. Among them, the solid polymer electrolyte is capable of improving the safety issue related to leakage by not including a liquid electrolyte. In addition, it has high chemical and electrochemical stability. However, its ionic conductivity at room temperature is lower than that of a liquid electrolyte. The material that is most commonly used in the solid polymer electrolyte is polyethylene oxide (PEO). PEO has the ability to conduct lithium ions even though it is a solid. However, when linear PEO is used as an electrolyte, the fluidity of the chain is limited due to high crystallinity. Also, linear PEO does not dissociate a large amount of lithium ions due to having a low dielectric constant of 5.0. Further, it is difficult to apply linear PEO to lithium secondary batteries due to its very low ionic conductivity at room temperature.

Meanwhile, lithium metal batteries are attracting attention as next-generation batteries because the theoretical capacity thereof is at least 10 times higher than that of graphite batteries. However, there is a problem that dendrites grow on the surface of lithium metal as lithium ions non-uniformly move on the surface of lithium metal. This problem prevents lithium metal batteries from being commercialized. Therefore, research is also needed on a material that has ionic conductivity and is capable of uniformly increasing the lithium ion transference number as a protective layer for lithium metal.

### [Related Art Documents]

### [Patent Documents]

(Patent Document 1) KR2017-111270A

### [Disclosure]

### [Technical Problem]

The present invention provides a composition for an ion-conducting membrane, which implements excellent ionic conductivity and exhibits low interfacial resistance between components, a long lifespan and excellent stability, and a battery comprising an ion-conducting membrane prepared by the same.

### [Technical Solution]

In order to achieve the above objective, 1) the present invention provides a composition for an ion-conducting membrane, which comprises a polymer comprising a structural unit represented by the following Chemical Formula 1; a compound represented by the following Chemical Formula 2; and a lithium salt compound, wherein the composition comprises the polymer in an amount of 80.00 to 90.00 parts by weight with respect to 100 parts by weight of the sum of the polymer and the compound represented by Chemical Formula 2:

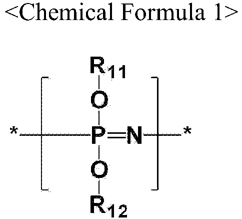

in Chemical Formula 1,
R₁₁ and R₁₂ are each independently hydrogen, a halogen, *-CN, *-OH, a halogen-substituted or unsubstituted C₁ to C₂₀ alkyl group, a C₂ to C₂₀ alkenyl group, a C₂ to C₂₀ alkynyl group, *-L₁₁-X₁₁-L₁₂-(-L₁₃-O-)n₁₁-R₁₃ or *-(L₁₄-X₁₂-)n₁₂-L₁₅-CH=CH₂,
L₁₁ to L₁₅ are each independently a direct bond, a C₁ to C₂₀ alkylene group, a C₂ to C₂₀ alkenylene group, or a C₂ to C₂₀ alkynylene group,
X₁₁ and X₁₂ are each independently a direct bond or *-O-*,
R₁₃ is hydrogen or a C₁ to C₂₀ alkyl group, and
n₁₁ and n₁₂ are each independently selected from 1.0 to 30.0; 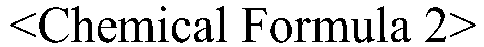 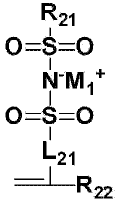 in Chemical Formula 2,
   M₁ is an alkali metal,
   L₂₁ is a direct bond, a C₁ to C₂₀ alkylene group, a C₂ to C₂₀ alkenylene group, a C₂ to C₂₀ alkynylene group, a C₆ to C₂₀ arylene group, or *-L₂₂-O-C(=O)-*,
   L₂₂ is a direct bond, a C₁ to C₂₀ alkylene group, a C₂ to C₂₀ alkenylene group, a C₂ to C₂₀ alkynylene group, or a C₆ to C₂₀ arylene group, and
   R₂₁ and R₂₂ are each independently, hydrogen, a halogen, *-CN, *-OH, a halogen-substituted or unsubstituted C₁ to C₂₀ alkyl group, a C₂ to C₂₀ alkenyl group, or a C₂ to C₂₀ alkynyl group.

According to 1), 2) the present invention may provide a composition for an ion-conducting membrane in which the structural unit represented by Chemical Formula 1 comprises one or more structural units selected from structural units represented by the following Chemical Formulas 1-1 to 1-8:

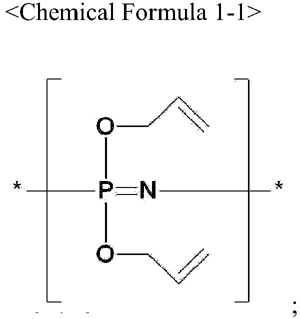

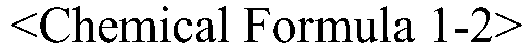

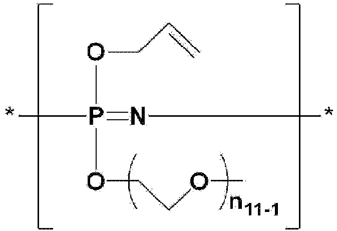

in Chemical Formula 1-2,
n₁₁₋₁ is selected from 1.0 to 30.0;

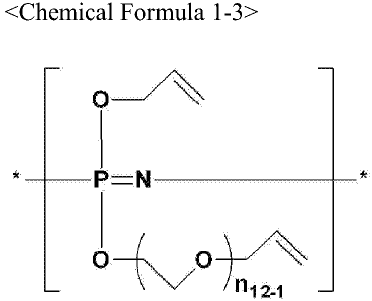

in Chemical Formula 1-3,
n₁₂₋₁ is selected from 1.0 to 30.0;

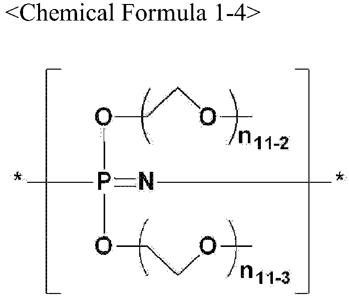

in Chemical Formula 1-4,
n₁₁₋₂ and n₁₁₋₃ are each independently selected from 1.0 to 30.0; 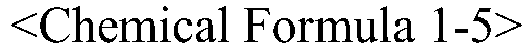 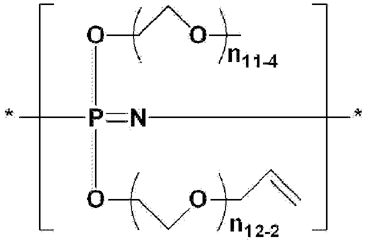 in Chemical Formula 1-5,
n₁₁₋₄ and n₁₂₋₂ are each independently selected from 1.0 to 30.0;

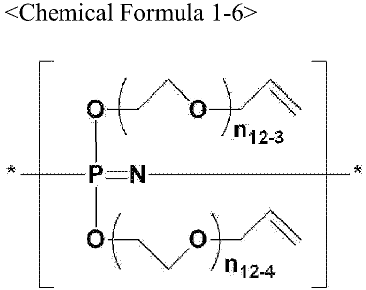

in Chemical Formula 1-6,
n₁₂₋₃ and n₁₂₋₄ are each independently selected from 1.0 to 30.0;

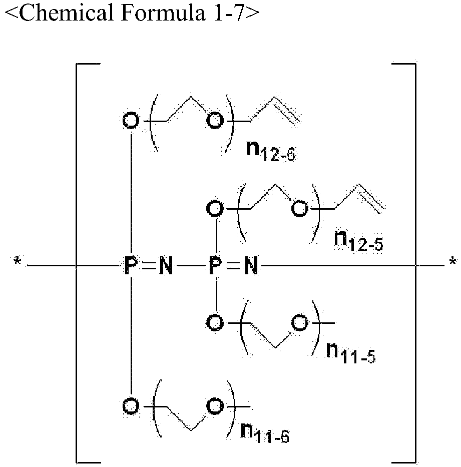

in Chemical Formula 1-7,
n₁₁₋₅, n₁₁₋₆, n₁₂₋₅ and n₁₂₋₆ are each independently selected from 1.0 to 30.0; 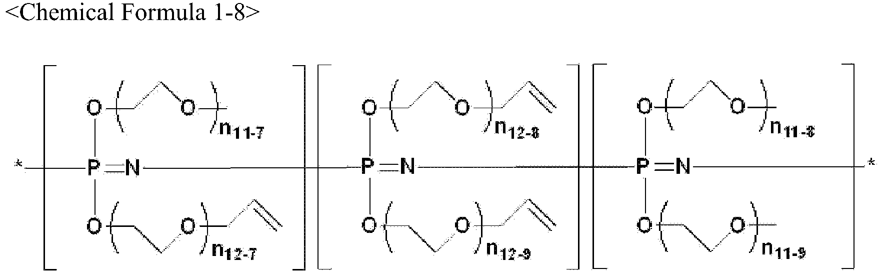 in Chemical Formula 1-8,
n₁₁₋₇, n₁₁₋₈, n₁₁₋₉, n₁₂₋₇, n₁₂₋₈ and n₁₂₋₉ are each independently selected from 1.0 to 30.0.

According to 1) or 2), 3) the present invention may provide a composition for an ion-conducting membrane in which the polymer has a weight average molecular weight of 1,000 to 10,000,000 g/mol.

According to any one of 1) to 3), 4) the present invention may provide a composition for an ion-conducting membrane in which the compound represented by Chemical Formula 2 is selected from compounds represented by the following Chemical Formulas 2-1 and 2-2:

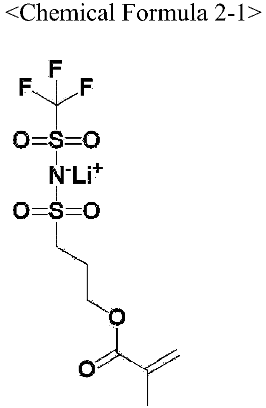

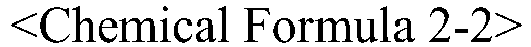

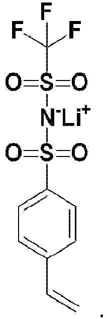

According to any one of 1) to 4), 5) the present invention may provide a composition for an ion-conducting membrane in which the lithium salt compound comprises one or more selected from a compound represented by the following Chemical Formula 3, lithium hexafluorophosphate, lithium tetrafluoroborate and lithium bis(oxalato)borate:

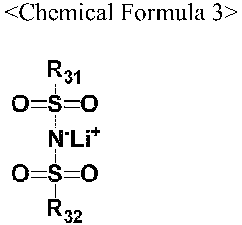

in Chemical Formula 3,
R₃₁ and R₃₂ are each independently hydrogen, a halogen, *-CN, *-OH, a halogen-substituted or unsubstituted C₁ to C₂₀ alkyl group, a C₂ to C₂₀ alkenyl group, or a C₂ to C₂₀ alkynyl group.

According to 5), 6) the present invention may provide a composition for an ion-conducting membrane in which the compound represented by Chemical Formula 3 comprises one or more selected from compounds represented by the following Chemical Formulas 3-1 and 3-2:

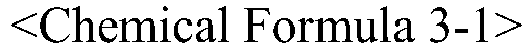

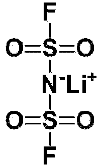

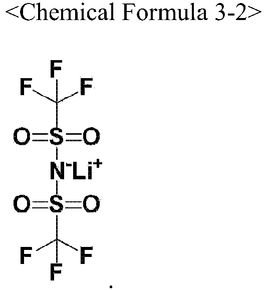

According to any one of 1) to 6), 7) the present invention may provide a composition for an ion-conducting membrane, which comprises the lithium salt compound in an amount of 1.00 to 60.00 parts by weight with respect to 100 parts by weight of the sum of the polymer and the compound represented by Chemical Formula 2.

According to any one of 1) to 7), 8) the present invention may provide a composition for an ion-conducting membrane, which comprises a compound represented by the following Chemical Formula 4:

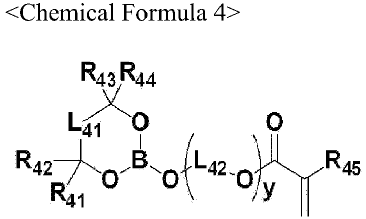

in Chemical Formula 4,
L₄₁ and L₄₂ are each independently a direct bond, a C₁ to C₂₀ alkylene group, a C₂ to C₂₀ alkenylene group, or a C₂ to C₂₀ alkynylene group,
R₄₁ to R₄₅ are each independently hydrogen, a halogen, *-CN, *-OH, a halogen-substituted or unsubstituted C₁ to C₂₀ alkyl group, a C₂ to C₂₀ alkenyl group, or a C₂ to C₂₀ alkynyl group, and
y is selected from 1.0 to 30.0.

According to 8), 9) the present invention may provide a composition for an ion-conducting membrane in which the compound represented by Chemical Formula 4 is a compound represented by the following Chemical Formula 4-1:

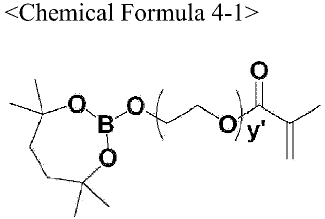

in Chemical Formula 4-1,
y' is selected from 1.0 to 30.0.

According to 8) or 9), 10) the present invention may provide a composition for an ion-conducting membrane, which comprising the compound represented by Chemical Formula 4 in an amount of 1.00 to 35.00 parts by weight with respect to 100 parts by weight of the sum of the polymer and the compound represented by Chemical Formula 2.

According to any one of 1) to 10), 11) the present invention may provide a composition for an ion-conducting membrane, which comprises a crosslinking agent.

According to 11), 12) the present invention may provide a composition for an ion-conducting membrane in which the crosslinking agent comprises one or more selected from poly(ethylene glycol) diacrylate, poly(ethylene glycol) methacrylate, poly(ethylene glycol) methyl ether methacrylate, poly(ethylene glycol) dimethacrylate, trimethylolpropane triacrylate, trimethylolpropane ethoxylate triacrylate and pentaerythritol tetraacrylate.

According to 11) or 12), 13) the present invention may provide composition for an ion-conducting membrane, which comprises the crosslinking agent in an amount of 0.50 to 50.00 parts by weight with respect to 100 parts by weight of the sum of the polymer and the compound represented by Chemical Formula 2.

14) The present invention provides a battery comprising an ion-conducting membrane prepared by the composition for an ion-conducting membrane according to any one of 1) to 13).

### [Advantageous Effects]

A composition for an ion-conducting membrane according to the present invention implements excellent ionic conductivity. Further, a battery comprising an ion-conducting membrane prepared by the composition for an ion-conducting membrane according to the present invention exhibits low interfacial resistance between components, a long lifespan and excellent stability.

### [Modes of the Invention]

Terms and words used in this specification and the claims should not be interpreted as limited to commonly used meanings or meanings in dictionaries and should be interpreted with meanings and concepts which are consistent with the technological scope of the invention based on the principle that the inventors can appropriately define concepts of terms in order to describe the invention in the best way.

In this specification, "on" means not only the case where a certain component is formed directly on another component, but also the case where a third component is interposed between these components.

In the present invention, an alkyl group refers to a linear or cyclic alkyl group, and although there is no particular limitation on the number of carbon atoms, the alkyl group may be a C₁ to C₂₀ alkyl group, preferably a C₁ to C₁₅ alkyl group, more preferably a C₁ to C₁₀ alkyl group, and most preferably a C₁ to C₅ alkyl group. The alkyl group may be further substituted with other substituents. Specific examples of the alkyl group comprise a methyl group, an ethyl group, an n-propyl group, an isopropyl group, an n-butyl group, an isobutyl group, a tert-butyl group, a sec-butyl group, an 1-methyl-butyl group, an 1-ethyl-butyl group, an n-pentyl group, an isopentyl group, a neopentyl group, a tert-pentyl group, an n-hexyl group, an 1-methylpentyl group, a 2-methylpentyl group, a 4-methyl-2-pentyl group, a 3,3-dimethylbutyl group, a 2-ethylbutyl group, an n-heptyl group, an 1-methylhexyl group, a cyclopentyl methyl group, a cyclohexyl methyl group, an n-octyl group, a tert-octyl group, an 1-methylheptyl group, a 2-ethylhexyl group, a 2-propylpentyl group, an n-nonyl group, a 2,2-dimethylheptyl group, an 1-ethyl-propyl group, an 1,1-dimethyl-propyl group, an isohexyl group, a 2-methylpentyl group, a 4-methylhexyl group and a 5-methylhexyl group, but the present invention is not limited thereto.

In the present invention, an alkylene group is the same as defined in the above description of the alkyl group, except that it is a divalent group.

In the present invention, an alkenyl group refers to a linear or cyclic alkenyl group, and although there is no particular limitation on the number of carbon atoms, the alkenyl group may be a C₂ to C₂₀ alkenyl group, preferably a C₂ to C₁₅ alkenyl group, more preferably a C₂ to C₁₀ alkenyl group, and most preferably a C₂ to C₅ alkenyl group. The alkenyl group may be further substituted with other substituents. Examples of the alkenyl group comprise vinyl, 1-propenyl, isopropenyl, 1-butenyl, 2-butenyl, 3-butenyl, 1-pentenyl, 2-pentenyl, 3-pentenyl, 3-methyl-1-butenyl, 1,3-butadienyl, allyl, 1-phenylvinyl-1-yl, 2-phenylvinyl-1-yl, 2,2-diphenylvinyl-1-yl, 2-phenyl-2-(naphthyl-1-yl)vinyl-1-yl, 2,2-bis(diphenyl-1-yl)vinyl-1-yl, stylbenyl and styrenyl groups, but the present invention is not limited thereto.

In the present invention, an alkenylene group is the same as defined in the above description of the alkenyl group, except that it is a divalent group.

In the present invention, an alkynyl group refers to a linear or cyclic alkynyl group, and although there is no particular limitation on the number of carbon atoms, the alkynyl group may be a C₂ to C₂₀ alkynyl group, preferably a C₂ to C₁₅ alkynyl group, more preferably a C₂ to C₁₀ alkynyl group, and most preferably a C₂ to C₅ alkynyl group. Examples of the alkynyl group comprise ethynyl, propynyl, 2-methyl-2-propynyl, 2-butynyl and 2-pentynyl groups, but the present invention is not limited thereto.

In the present invention, an alkynylene group is the same as defined in the above description of the alkynyl group, except that it is a divalent group.

In the present invention, an aryl group refers to a monocyclic or polycyclic aryl group, and although there is no particular limitation on the number of carbon atoms, the aryl group may be a C₆ to C₂₀ aryl group, preferably a C₆ to C₁₈ aryl group, more preferably a C₆ to C₁₆ aryl group, and most preferably a C₆ to C₁₄ aryl group. The aryl group may be further substituted with other substituents. Here, the polycyclic aryl group refers to an aryl group directly connected or condensed with another ring group. Specific examples of the aryl group comprise a phenyl group, a biphenyl group, a triphenyl group, a naphthyl group and an anthryl group, but the present invention is not limited thereto.

In the present invention, an alkali metal may comprise one or more of Li, Na, K, Rb, Cs and Fr.

In the present invention, a halogen may comprise one or more of F, Cl, Br, I and At.

In the present invention, "*" refers to a binding site.

In the present invention, a halogen-substituted C₁ to C₂₀ alkyl group may be a C₁ to C₂₀ alkyl group in which hydrogen atoms are entirely or partially substituted with halogens. Specifically, it may be a primary to tertiary alkyl halide group. Also, examples of the halogen-substituted C₁ to C₂₀ alkyl group comprise a trifluoromethyl group and the like.

### 1. Composition for ion-conducting membrane

A composition for an ion-conducting membrane according to one embodiment of the present invention comprises a polymer comprising a structural unit represented by the following Chemical Formula 1; a compound represented by the following Chemical Formula 2; and a lithium salt compound, wherein the composition comprises the polymer in an amount of 80.00 to 90.00 parts by weight with respect to 100 parts by weight of the sum of the polymer and the compound represented by Chemical Formula 2: 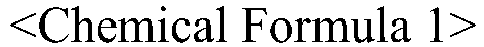 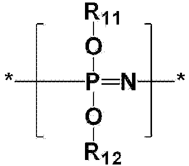 in Chemical Formula 1,
R₁₁ and R₁₂ are each independently hydrogen, a halogen, *-CN, *-OH, a halogen-substituted or unsubstituted C₁ to C₂₀ alkyl group, a C₂ to C₂₀ alkenyl group, a C₂ to C₂₀ alkynyl group, *-L₁₁-X₁₁-L₁₂-(-L₁₃-O-)n₁₁-R₁₃ or *-(L₁₄-X₁₂-)n₁₂-L₁₅-CH=CH₂,
L₁₁ to L₁₅ are each independently a direct bond, a C₁ to C₂₀ alkylene group, a C₂ to C₂₀ alkenylene group, or a C₂ to C₂₀ alkynylene group,
X₁₁ and X₁₂ are each independently a direct bond or *-O-*,
R₁₃ is hydrogen or a C₁ to C₂₀ alkyl group, and
n₁₁ and n₁₂ are each independently selected from 1.0 to 30.0;

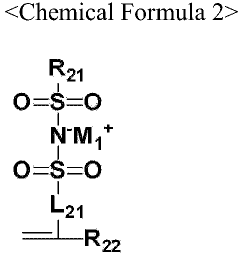

   in Chemical Formula 2,
   M₁ is an alkali metal,
   L₂₁ is a direct bond, a C₁ to C₂₀ alkylene group, a C₂ to C₂₀ alkenylene group, a C₂ to C₂₀ alkynylene group, a C₆ to C₂₀ arylene group, or *-L₂₂-O-C(=O)-*,
   L₂₂ is a direct bond, a C₁ to C₂₀ alkylene group, a C₂ to C₂₀ alkenylene group, a C₂ to C₂₀ alkynylene group, or a C₆ to C₂₀ arylene group, and
   R₂₁ and R₂₂ are each independently, hydrogen, a halogen, *-CN, *-OH, a halogen-substituted or unsubstituted C₁ to C₂₀ alkyl group, a C₂ to C₂₀ alkenyl group, or a C₂ to C₂₀ alkynyl group.

In addition, the composition for an ion-conducting membrane according to one embodiment of the present invention may comprise a compound represented by the following Chemical Formula 4:

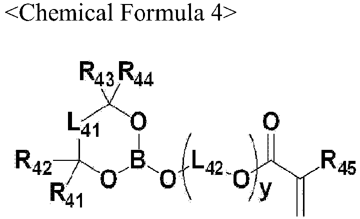

in Chemical Formula 4,
L₄₁ and L₄₂ are each independently a direct bond, a C₁ to C₂₀ alkylene group, a C₂ to C₂₀ alkenylene group, or a C₂ to C₂₀ alkynylene group,
R₄₁ to R₄₅ are each independently hydrogen, a halogen, *-CN, *-OH, a halogen-substituted or unsubstituted C₁ to C₂₀ alkyl group, a C₂ to C₂₀ alkenyl group, or a C₂ to C₂₀ alkynyl group, and
y is selected from 1.0 to 30.0.

In addition, the composition for an ion-conducting membrane according to one embodiment of the present invention may comprise a crosslinking agent.

Additionally, the composition for an ion-conducting membrane according to one embodiment of the present invention may further comprise an additive.

Hereinafter, the composition for an ion-conducting membrane according to one embodiment of the present invention will be described in detail.

### 1) Polymer comprising structural unit represented by Chemical Formula 1

The polymer comprising the structural unit represented by Chemical Formula 1 is a structure in which a flame-retardant backbone is provided with ionic conductivity, and serves to transfer alkali metal ions, specifically, lithium ions.

One of R₁₁ and R₁₂ may preferably be a C₂ to C₁₅ alkenyl group or *-(L₁₄-X₁₂-)n₁₂-L₁₅-CH=CH₂, more preferably a C₂ to C₁₀ alkenyl group or *-(L₁₄-X₁₂-)n₁₂-L₁₅-CH=CH₂, and most preferably a C₂ to C₅ alkenyl group or *-(L₁₄-X₁₂-)n₁₂-L₁₅-CH=CH₂.

Here, L₁₄ and L₁₅ may each independently preferably be a C₁ to C₁₅ alkylene group, more preferably a C₁ to C₁₀ alkylene group, and most preferably a C₁ to C₁₀ alkylene group.

The other of R₁₁ and R₁₂ may preferably be hydrogen, a halogen, *-CN, *-OH, a halogen-substituted or unsubstituted C₁ to C₁₅ alkyl group, a C₂ to C₁₅ alkenyl group, a C₂ to C₁₅ alkynyl group or *-L₁₁-X₁₁-L₁₂-(-L₁₃-O-)n₁₁-R₁₃, more preferably hydrogen, a halogen, *-CN, *-OH, a halogen-substituted or unsubstituted C₁ to C₁₀ alkyl group, a C₂ to C₁₀ alkenyl group, a C₂ to C₁₀ alkynyl group or *-L₁₁-X₁₁-L₁₂-(-L₁₃-O-)n₁₁-R₁₃, and most preferably hydrogen, a halogen, *-CN, *-OH, a halogen-substituted or unsubstituted C₁ to C₅ alkyl group, a C₂ to C₅ alkenyl group, a C₂ to C₅ alkynyl group, or *-L₁₁-X₁₁-L₁₂-(-L₁₃-O-)n₁₁-R₁₃.

Meanwhile, it is most preferable that the other of R₁₁ and R₁₂ is *-L₁₁-X₁₁-L₁₂-(-L₁₃-O-)n₁₁-R₁₃ to combine with alkali metal ions to dissolve alkali metal salts or move alkali metal ions, specifically, to combine with lithium ions to dissolve lithium salts or move lithium ions.

L₁₁ to L₁₅ may each independently preferably be a direct bond, a C₁ to C₁₅ alkylene group, a C₂ to C₁₅ alkenylene group, or a C₂ to C₁₅ alkynylene group, more preferably a direct bond, a C₁ to C₁₀ alkylene group, a C₂ to C₁₀ alkenylene group, or a C₂ to C₁₀ alkynylene group, and most preferably a direct bond, a C₁ to C₅ alkylene group, a C₂ to C₅ alkenylene group, or a C₂ to C₅ alkynylene group.

R₁₃ may preferably be hydrogen or a C₁ to C₁₅ alkyl group, more preferably hydrogen or a C₁ to C₁₀ alkyl group, and most preferably hydrogen or a C₁ to C₅ alkyl group.

n₁₁ and n₁₂ may each be independently preferably selected from 1.0 to 25.0, more preferably from 1.0 to 20.0, and most preferably from 1.0 to 10.0.

The structural unit represented by Chemical Formula 1 may comprise one or more structural units selected from structural units represented by the following Chemical Formulas 1-1 to 1-8:

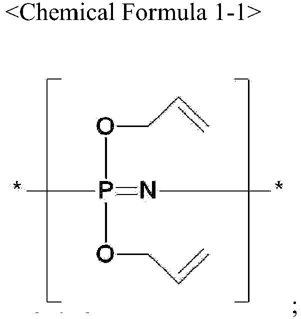

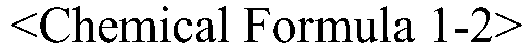

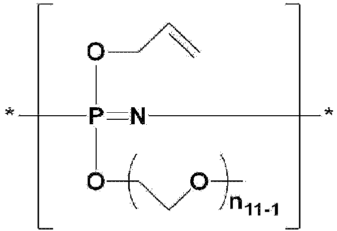

in Chemical Formula 1-2,
n₁₁₋₁ is selected from 1.0 to 30.0;

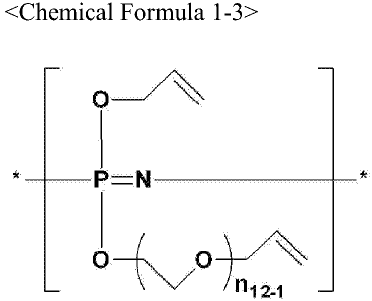

in Chemical Formula 1-3,
n₁₂₋₁ is selected from 1.0 to 30.0;

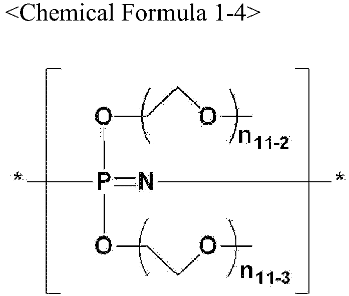

in Chemical Formula 1-4,
n₁₁₋₂ and n₁₁₋₃ are each independently selected from 1.0 to 30.0; 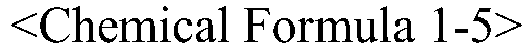 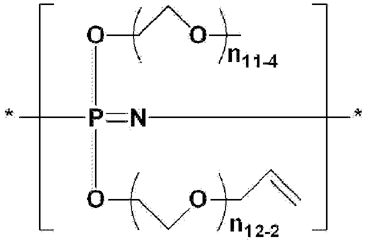 in Chemical Formula 1-5,
n₁₁₋₄ and n₁₂₋₂ are each independently selected from 1.0 to 30.0;

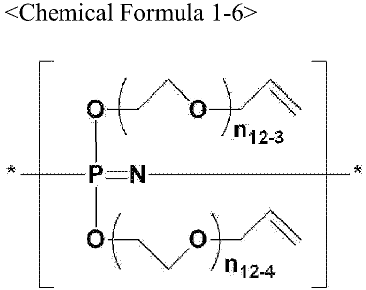

in Chemical Formula 1-6,
n₁₂₋₃ and n₁₂₋₄ are each independently selected from 1.0 to 30.0;

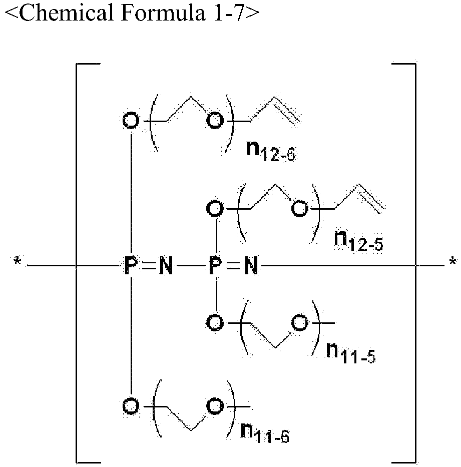

in Chemical Formula 1-7,
n₁₁₋₅, n₁₁₋₆, n₁₂₋₅ and n₁₂₋₆ are each independently selected from 1.0 to 30.0; 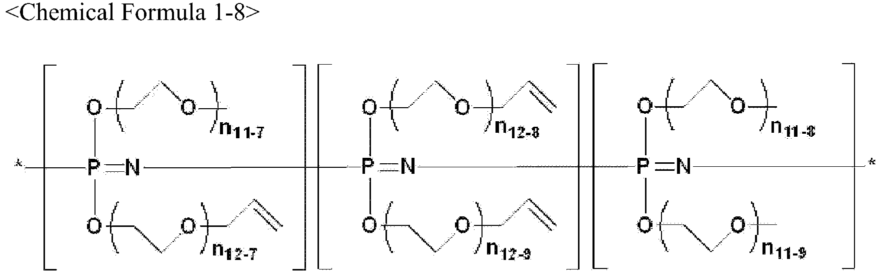 in Chemical Formula 1-8,
n₁₁₋₇, n₁₁₋₈, n₁₁₋₉, n₁₂₋₇, n₁₂₋₈ and n₁₂₋₉ are each independently selected from 1.0 to 30.0.

n₁₁₋₁ to n₁₁₋₉ and n₁₂₋₁ to n₁₂₋₉ may each be independently preferably selected from 1.0 to 25.0, more preferably from 1.0 to 20.0, and most preferably from 2.0 to 8.0. When the above-described condition is satisfied, the polymer can be easily synthesized, and yield can also increase.

The polymer may comprise a terminal group represented by the following Chemical Formula 1-9:

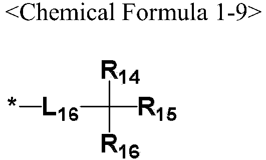

in Chemical Formula 1-9,
L₁₆ is a direct bond, a C₁ to C₂₀ alkylene group, a C₂ to C₂₀ alkenylene group, or a C₂ to C₂₀ alkynylene group, and
R₁₄ to R₁₆ are each independently hydrogen or a halogen.

L₁₆ may preferably be a direct bond, a C₁ to C₁₅ alkylene group, a C₂ to C₁₅ alkenylene group, or a C₂ to C₁₅ alkynylene group, more preferably a direct bond, a C₁ to C₁₀ alkylene group, a C₂ to C₁₀ alkenylene group, or a C₂ to C₁₀ alkynylene group, and most preferably a direct bond, a C₁ to C₅ alkylene group, a C₂ to C₅ alkenylene group, or a C₂ to C₅ alkynylene group.

The polymer may have a weight average molecular weight of 1,000 to 10,000,000 g/mol, preferably 10,000 to 10,000,000 g/mol, and more preferably 50,000 to 5,000,000 g/mol. When the above-described condition is satisfied, the polymer can be easily synthesized, yield can increase, and process costs can also be reduced.

Here, the weight average molecular weight may be measured by gel permeation chromatography, and in the gel permeation chromatography measurement, the Agilent 1200 series HPLC system may be used, and specific measurement conditions are as follows.
Refractive index detector: Waters 2414
Temperature of refractive index detector: 25 °C
Data processing: Agilent Chem Station S/W
Eluent: mixed solution composed of 0.05 M LiBr and dimethylformamide
Column model: PL Mixed C & Mixed D from Agilent
Column temperature: 60 °C
Flow rate: 1.0 ml/min
Standard sample: polystyrene
Concentration of standard sample: 1.0 mg/ml

The amount of the polymer may be 80.00 to 90.00 parts by weight, preferably 83.00 to 90.00 parts by weight, and more preferably 85.00 to 90.00 parts by weight with respect to 100 parts by weight of the sum of the polymer and the compound represented by Chemical Formula 2. When the above-described condition is satisfied, the composition for an ion-conducting membrane can have strength and ionic conductivity suitable for use as an electrolyte membrane. When the content of the polymer is lower than the above-described condition, the compound represented by Chemical Formula 2 is inevitably comprised in a relatively excessive amount, and thus a molar ratio of *-(-CH₂-CH₂-O)-* and lithium ions is outside an optimal value. As a result, ionic conductivity is significantly degraded. When the content of the polymer is higher than the above-described condition, the compound represented by Chemical Formula 2 is inevitably comprised in a relatively small amount, and thus an ion-conducting membrane does not have appropriate mechanical strength. As a result, it is easily damaged and self-standing is not possible.

Meanwhile, the polymer comprising the structural unit represented by Chemical Formula 1 may be prepared by a method comprising polymerizing a monomer represented by the following Chemical Formula 5 to prepare an intermediate comprising a structural unit represented by the following Chemical Formula 6; and substituting the halogen(s) of the intermediate with one or more selected from a monomer represented by the following Chemical Formula 7 and a monomer represented by the following Chemical Formula 8.

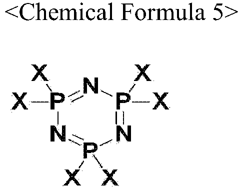

In Chemical Formula 5,
X is a halogen.

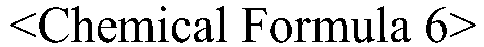

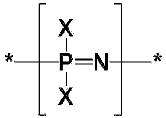

In Chemical Formula 6,
X is a halogen.

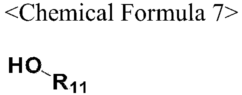

In Chemical Formula 7,
R₁₁ is the same as defined in Chemical Formula 1.

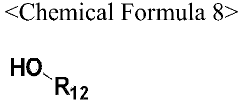

In Chemical Formula 8,
R₁₂ is the same as defined in Chemical Formula 1.

The polymerization may be selected from solution polymerization and bulk polymerization.

### 2) Compound represented by Chemical Formula 2

Since the compound represented by Chemical Formula 2 comprises a crosslinkable functional group, anions are fixed to the chain of this compound. Accordingly, the compound represented by Chemical Formula 2 may improve the alkali metal ion transference number, specifically, the lithium ion transference number.

In order to increase the degree of dissociation of alkali metal ions, specifically, the degree of dissociation of lithium ions, L₂₁ in Chemical Formula 2 may preferably be a direct bond, a C₁ to C₁₅ alkylene group, a C₂ to C₁₅ alkenylene group, a C₂ to C₁₅ alkynylene group, a C₆ to C₁₈ arylene group, or *-L₂₂-O-C(=O)-*, more preferably a direct bond, a C₁ to C₁₀ alkylene group, a C₂ to C₁₀ alkenylene group, a C₂ to C₁₀ alkynylene group, a C₆ to C₁₆ arylene group, or *-L₂₂-O-C(=O)-*, and most preferably a direct bond, a C₁ to C₅ alkylene group, a C₂ to C₅ alkenylene group, a C₂ to C₅ alkynylene group, a C₆ to C₁₄ arylene group, or *-L₂₂-O-C(=O)-*.

L₂₂ may preferably be a direct bond, a C₁ to C₁₅ alkylene group, a C₂ to C₁₅ alkenylene group, a C₂ to C₁₅ alkynylene group, or a C₆ to C₁₅ arylene group, more preferably a direct bond, a C₁ to C₁₀ alkylene group, a C₂ to C₁₀ alkenylene group, a C₂ to C₁₀ alkynylene group, or a C₆ to C₁₀ arylene group, and most preferably a direct bond, a C₁ to C₅ alkylene group, a C₂ to C₅ alkenylene group, a C₂ to C₅ alkynylene group, or a C₆ to C₅ arylene group.

L₂₂ may be combined with S of the compound represented by Chemical Formula 2.

R₂₁ and R₂₂ may each independently preferably be hydrogen, a halogen, *-CN, *-OH, a halogen-substituted or unsubstituted C₁ to C₁₅ alkyl group, a C₂ to C₁₅ alkenyl group, or a C₂ to C₁₅ alkynyl group, more preferably hydrogen, a halogen, *-CN, *-OH, a halogen-substituted or unsubstituted C₁ to C₁₀ alkyl group, a C₂ to C₁₀ alkenyl group, or a C₂ to C₁₀ alkynyl group, and most preferably hydrogen, a halogen, *-CN, *-OH, a halogen-substituted or unsubstituted C₁ to C₅ alkyl group, a C₂ to C₅ alkenyl group, or a C₂ to C₅ alkynyl group.

The compound represented by Chemical Formula 2 may be selected from compounds represented by the following Chemical Formulas 2-1 and 2-2:

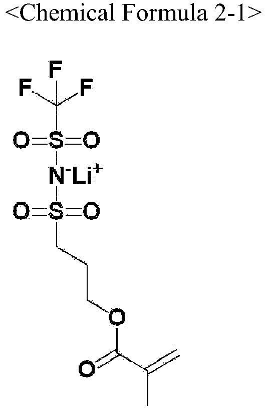

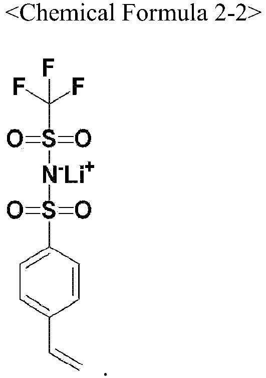

The amount of the compound represented by Chemical Formula 2 may be 10.00 to 20.00 parts by weight, preferably 10.00 to 17.00 parts by weight, and more preferably 10.00 to 15.00 parts by weight with respect to 100 parts by weight of the sum of the polymer and the compound represented by Chemical Formula 2. When the above-described condition is satisfied, a composition for an ion-conducting membrane, which has mechanically stable strength, flexibility, and excellent ionic conductivity, can be prepared. However, when the content of the compound represented by Chemical Formula 2 is lower than the above-described condition, an ion-conducting membrane does not have appropriate strength, and thus it is easily damaged and self-standing is not possible. When the content of the compound represented by Chemical Formula 2 is higher than the above-described condition, a molar ratio of *-(-CH₂-CH₂-O)-* and lithium ions is outside an optimal value, and thus ionic conductivity is significantly degraded.

### 3) Lithium salt compound

The lithium salt compound serves to improve the ionic conductivity of the composition for an ion-conducting membrane.

The lithium salt compound may comprise one or more selected from a compound represented by the following Chemical Formula 3, lithium hexafluorophosphate, lithium tetrafluoroborate and lithium bis(oxalato)borate:

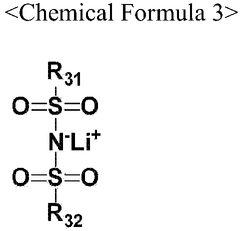

in Chemical Formula 3,
R₃₁ and R₃₂ are each independently hydrogen, a halogen, *-CN, *-OH, a halogen-substituted or unsubstituted C₁ to C₂₀ alkyl group, a C₂ to C₂₀ alkenyl group, or a C₂ to C₂₀ alkynyl group.

The compound represented by Chemical Formula 3 does not comprise a crosslinkable functional group unlike the compound represented by Chemical Formula 2. For this reason, the anions in the compound represented by Chemical Formula 3 can be free compared to the anions of the compound represented by Chemical Formula 2. Therefore, when the compound represented by Chemical Formula 2 and the compound represented by Chemical Formula 3 are used together, the ionic conductivity of the composition for an ion-conducting membrane can be improved due to their synergistic action.

In order to increase the degree of dissociation of lithium ions, R₃₁ and R₃₂ in Chemical Formula 3 may each independently preferably be hydrogen, a halogen, *-CN, *-OH, a halogen-substituted or unsubstituted C₁ to C₁₅ alkyl group, a C₂ to C₁₅ alkenyl group, or a C₂ to C₁₅ alkynyl group, more preferably hydrogen, a halogen, *-CN, *-OH, a halogen-substituted or unsubstituted C₁ to C₁₀ alkyl group, a C₂ to C₁₀ alkenyl group, or a C₂ to C₁₀ alkynyl group, and most preferably hydrogen, a halogen, *-CN, *-OH, a halogen-substituted or unsubstituted C₁ to C₅ alkyl group, a C₂ to C₅ alkenyl group, or a C₂ to C₅ alkynyl group.

The compound represented by Chemical Formula 3 may comprise one or more selected from compounds represented by the following Chemical Formulas 3-1 and 3-2:

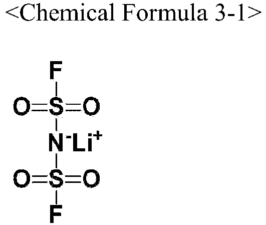

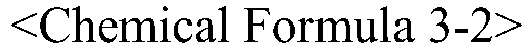

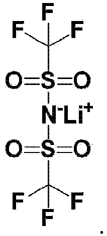

The amount of the lithium salt compound may be 1.00 to 60.00 parts by weight, preferably 3.00 to 55.00 parts by weight, and more preferably 4.00 to 51.00 parts by weight with respect to 100 parts by weight of the sum of the polymer and the compound represented by Chemical Formula 2. When the above-described condition is satisfied, the amount of alkali metal ions, specifically, the amount of lithium ions, which is insufficient with only the compound represented by Chemical Formula 2, can be supplemented. Also, the oxygen comprised in the polymer and the lithium ions comprised in the compound represented by Chemical Formula 2 and the lithium salt compound are combined to have an optimal molar ratio, and thus ionic conductivity can be improved.

### 4) Compound represented by Chemical Formula 4

The compound represented by Chemical Formula 4 may serve to improve the lithium ion transference number by capturing the anions of the compound represented by Chemical Formula 3.

In Chemical Formula 4, L₄₁ and L₄₂ may each independently preferably be a direct bond, a C₁ to C₁₅ alkylene group, a C₂ to C₁₅ alkenylene group, or a C₂ to C₁₅ alkynylene group, more preferably a direct bond, a C₁ to C₁₀ alkylene group, a C₂ to C₁₀ alkenylene group, or a C₂ to C₁₀ alkynylene group, and most preferably a direct bond, a C₁ to C₁₀ alkylene group, a C₂ to C₁₀ alkenylene group, or a C₂ to C₁₀ alkynylene group.

R₄₁ to R₄₅ may each independently preferably be hydrogen, a halogen, *-CN, *-OH, a halogen-substituted or unsubstituted C₁ to C₁₅ alkyl group, a C₂ to C₁₅ alkenyl group, or a C₂ to C₁₅ alkynyl group, more preferably hydrogen, a halogen, *-CN, *-OH, a halogen-substituted or unsubstituted C₁ to C₁₀ alkyl group, a C₂ to C₁₀ alkenyl group, or a C₂ to C₁₀ alkynyl group, and most preferably hydrogen, a halogen, *-CN, *-OH, a halogen-substituted or unsubstituted C₁ to C₅ alkyl group, a C₂ to C₅ alkenyl group, or a C₂ to C₅ alkynyl group.

The compound represented by Chemical Formula 4 may be a compound represented by the following Chemical Formula 4-1:

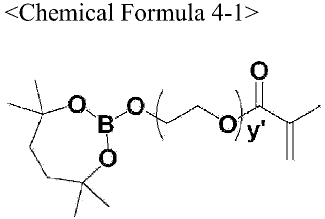

in Chemical Formula 4-1,
y' is selected from 1.0 to 30.0.

y' may be preferably selected from 1 to 23.0, more preferably from 1 to 16.0, and most preferably from 1 to 10.0. When the above-described condition is satisfied, a decrease in the strength of an ion-conducting membrane prepared by the composition for an ion-conducting membrane can be minimized while increasing the lithium ion transference number.

The amount of the compound represented by Chemical Formula 4 may be 1.00 to 35.00 parts by weight, preferably 3.00 to 30.00 parts by weight, and more preferably 5.00 to 25.00 parts by weight with respect to 100 parts by weight of the sum of the polymer and the compound represented by Chemical Formula 2. When the above-described condition is satisfied, the lithium ion transference number can be improved.

### 5) Crosslinking agent

The crosslinking agent may serve to increase the mechanical strength of an ion-conducting membrane prepared by the composition for an ion-conducting membrane through additional crosslinking.

The crosslinking agent may comprise a crosslinkable functional group, and the crosslinkable functional group may be a (meth)acrylate group. Also, the crosslinking agent may comprise *-(-CH₂-CH₂-O)-* as a repeating unit.

The crosslinking agent may comprise one or more selected from poly(ethylene glycol) diacrylate, poly(ethylene glycol) methacrylate, poly(ethylene glycol) methyl ether methacrylate, poly(ethylene glycol) dimethacrylate, trimethylolpropane triacrylate, trimethylolpropane ethoxylate triacrylate and pentaerythritol tetraacrylate.

The composition for an ion-conducting membrane may comprise the crosslinking agent in an amount of 0.50 to 50.00 parts by weight, preferably 0.50 to 40.00 parts by weight, and more preferably 0.5 to 30.00 parts by weight with respect to 100 parts by weight of the sum of the polymer and the compound represented by Chemical Formula 2. When the above-described condition is satisfied, an ion-conducting membrane having improved mechanical properties while maintaining excellent ionic conductivity can be prepared.

### 6) Additive

The additive may serve to increase the mechanical strength of an ion-conducting membrane prepared by the composition for an ion-conducting membrane.

The additive may comprise one or more selected from inert inorganic particles and a lithium-based solid electrolyte.

The inert inorganic particles may comprise one or more selected from silicon dioxide, aluminum oxide, zirconium oxide and titanium oxide.

The lithium-based solid electrolyte may comprise one or more selected from lithium aluminum titanium phosphate, lithium aluminum germanium phosphate, lithium lanthanum zirconium oxide, lithium lanthanum titanate and lithium germanium phosphorus sulfide.

The composition for an ion-conducting membrane may comprise the additive in an amount of 0.30 to 95.00 parts by weight, preferably 0.50 to 90.00 parts by weight, and more preferably 10.00 to 90.00 parts by weight with respect to 100 parts by weight of the sum of the polymer and the compound represented by Chemical Formula 2. When the above-described condition is satisfied, the mechanical strength of an ion-conducting membrane can be improved.

### 2. Battery

A battery according to another embodiment of the present invention comprises an ion-conducting membrane prepared by the composition for an ion-conducting membrane according to one embodiment of the present invention.

The battery may be an all-solid-state battery. The all-solid-state battery may comprise a positive electrode, a negative electrode (or no negative electrode for an anode-less battery), and an ion-conducting membrane interposed between the positive electrode and the negative electrode and prepared by the composition for an ion-conducting membrane according to one embodiment of the present invention. The all-solid-state battery exhibits excellent initial efficiency, lifespan characteristics and output characteristics because ionic conductivity is less decreased and the electron conductivity of the comprised ion-conducting membrane is low.

The all-solid-state battery may be prepared by a typical method known in the art. For example, it may be prepared by preparing a laminate in which an ion-conducting membrane is present between a positive electrode and a negative electrode and pressing the laminate.

### 1) Positive electrode

The positive electrode may be prepared by applying, onto a positive electrode current collector, a positive electrode slurry comprising a positive electrode active material, a binder, a conductive material and a solvent.

The positive electrode current collector is not particularly limited as long as it does not cause a chemical change in the battery and has conductivity, and for example, stainless steel, aluminum, nickel, titanium, calcined carbon, or aluminum or stainless steel whose surface has been treated with carbon, nickel, titanium, silver or the like may be used. Also, the positive electrode current collector may have fine irregularities formed on the surface thereof to increase the bonding strength of the positive electrode active material, and may be used in any of various forms such as a film, a sheet, a foil, a net, a porous material, a foam, a non-woven fabric and the like.

The positive electrode active material is a compound capable of reversible intercalation and deintercalation of lithium and may specifically comprise a lithium metal oxide comprising lithium and one or more metals of cobalt, manganese, nickel and aluminum. More specifically, the lithium metal oxide may be a lithium-manganese-based oxide (e.g., LiMnO₂, LiMn₂O₄, etc.), a lithium-cobalt-based oxide (e.g., LiCoO₂, etc.), a lithium-nickel-based oxide (e.g., LiNiO₂, etc.), a lithium-nickel-manganese-based oxide (e.g., LiNi_{1-Y}Mn_{Y}O₂ (where 0<Y<1), LiMn_{2-z}Ni_{z}O₄ (where 0<Z<2), etc.), a lithium-nickel-cobalt-based oxide (e.g., LiNi_{1-Y1}Co_{Y1}O₂ (where 0<Y1<1), etc.), a lithium-manganese-cobalt-based oxide (e.g., LiCo_{1-Y2}Mn_{Y2}O₂ (where 0<Y2<1), LiMn_{2-z1}Co_{z1}O₄ (where 0<Z1<2), etc.), a lithium-nickel-manganese-cobalt-based oxide (e.g., Li(NiₚCo_{q}Mnᵣ₁)O₂ (where 0<p<1, 0<q<1, 0<r1<1 and p+q+r1=1), Li(Niₚ₁Co_{q1}Mnᵣ₂)O₄ (where 0<p1<2, 0<q1<2, 0<r2<2 and p1+q1+r2=2), etc.), or a lithium-nickel-cobalt-transition metal (M) oxide (e.g., Li(Niₚ₂Co_{q2}Mnᵣ₃M_{S2})O₂ (where M is selected from the group consisting of Al, Fe, V, Cr, Ti, Ta, Mg and Mo, and p2, q2, r3 and s2 are respective atomic fractions of elements and satisfy 0<p2<1, 0<q2<1, 0<r3<1, 0<s2<1, and p2+q2+r3+s2=1), etc.), and any one or a mixture of two or more thereof may be comprised.

Among them, in terms of increasing the capacity and stability of the battery, the lithium metal oxide may be LiCoO₂, LiMnO₂, LiNiO₂, a lithium nickel manganese cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, Li(Ni_{0.8}Mn_{0.1}Co_{0.1})O₂, etc.) or a lithium nickel cobalt aluminum oxide (e.g., Li(Ni_{0.8}Co_{0.15}Al_{0.05})O₂, etc.). Also, in consideration of the remarkable improvement effect according to the control of the type and content ratio of constituent elements forming the lithium metal oxide, the lithium metal oxide may be Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, Li(Ni_{0.8}Mn_{0.1}Co_{0.1})O₂ or the like, and any one or a mixture of two or more thereof may be used.

The amount of the positive electrode active material may be 60 wt% or more, 70 wt% or more, 80 wt% or more and 99 wt% or less, 98 wt% or less based on the total weight of solids excluding the solvent in the positive electrode slurry.

The binder is a component that assists the bonding among the conductive material, the active material and the current collector. Examples of the binder comprise polyvinylidene fluoride, polyvinyl alcohol, carboxymethylcellulose, starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene butadiene rubber, a fluoroelastomer, and various copolymers thereof.

Typically, the amount of the binder may be 1 to 20 wt%, preferably 1 to 15 wt%, and more preferably 1 to 10 wt% based on the total weight of solids excluding the solvent in the positive electrode slurry.

The conductive material is a component that further increases the conductivity of the positive electrode active material.

The conductive material is not particularly limited as long as it does not cause a chemical change in the battery and has conductivity, and for example, graphite; a carbon-based material such as carbon black, acetylene black, Ketjen black, channel black, furnace black, lamp black, thermal black or the like; a conductive fiber such as carbon fiber, metal fiber or the like; fluorinated carbon powder; a metal powder such as aluminum powder, nickel powder or the like; a conductive whisker such as zinc oxide, potassium titanate or the like; a conductive metal oxide such as titanium oxide or the like; or a conductive material such as a polyphenylene derivative or the like may be used.

Typically, the amount of the conductive material may be 1 wt% or more and 20 wt% or less, 15 wt% or less, 10 wt% or less based on the total weight of solids excluding the solvent in the positive electrode slurry.

The solvent may comprise an organic solvent such as N-methyl-2-pyrrolidone (NMP) or the like and may be used in an amount that exhibits preferable viscosity when the positive electrode active material and optionally the binder and the conductive material are comprised. For example, the solvent may be comprised so that the concentration of solids comprising the positive electrode active material and optionally the binder and the conductive material is 50 wt% or more, 60 wt% or more, 70 wt% or more and 95 wt% or less, 90 wt% or less, 85 wt% or less.

### 2) Negative electrode

The negative electrode may be prepared, for example, by applying, onto a negative electrode current collector, a negative electrode slurry comprising a negative electrode active material, a binder, a conductive material and a solvent, or a graphite electrode composed of carbon (C) or lithium metal itself having a thickness of 50 µm or less may be used as the negative electrode. Alternatively, in the case of an anode-less battery, the negative electrode may be excluded.

For example, when the negative electrode is prepared by applying the negative electrode slurry onto the negative electrode current collector, the negative electrode current collector may typically have a thickness of 3 to 500 µm. The negative electrode current collector is not particularly limited as long as it does not cause a chemical change in the battery and has high conductivity, and for example, copper, stainless steel, aluminum, nickel, titanium, calcined carbon, copper or stainless steel whose surface has been treated with carbon, nickel, titanium, silver or the like, or an aluminum-cadmium alloy may be used. Also, like the positive electrode current collector, the negative electrode current collector may have fine irregularities formed on the surface thereof to increase the bonding strength of the negative electrode active material, and may be used in any of various forms such as a film, a sheet, a foil, a net, a porous material, a foam, a non-woven fabric and the like.

The negative electrode active material may be one or more selected from a carbonaceous material such as natural graphite or artificial graphite; a lithium-containing titanium composite oxide (LTO); Si, SiOₓ, a metal (Me) such as Sn, Li, Zn, Mg, Cd, Ce, Ni or Fe; an alloy of the metal (Me); an oxide (MeOₓ) of the metal (Me); and a composite of the metal (Me) and carbon. As the negative electrode active material, specifically, a silicon-based negative electrode active material, comprising silicon (Si), a silicon oxide (SiOₓ) or a silicon alloy, or lithium metal may be used. The silicon-based negative electrode active material can improve the high-temperature stability and lifespan characteristics of the battery as a thin stable SEI layer comprising a siloxane bond is formed.

In addition, the lithium metal may typically be lithium metal or a lithium alloy (e.g., an alloy of lithium and a metal such as aluminum, zinc, bismuth, cadmium, antimony, silicon, lead, tin, gallium or indium). The lithium metal negative electrode active material may be in the form of foil and may form a separate layer from the negative electrode current collector by being deposited on one surface of the negative electrode current collector.

The amount of the negative electrode active material may be 60 wt% or more, 70 wt% or more, 80 wt% or more and 99 wt% or less, 98 wt% or less based on the total weight of solids excluding the solvent in the negative electrode slurry.

The binder is a component that assists the bonding among the conductive material, the active material and the current collector. Examples of the binder comprise polyvinylidene fluoride, polyvinyl alcohol, carboxymethylcellulose, starch, hydroxypropyl cellulose, regenerated cellulose, polyvinylpyrrolidone, tetrafluoroethylene, polyethylene, polypropylene, an EPDM, a sulfonated EPDM, styrene butadiene rubber, a fluoroelastomer, and various copolymers thereof.

Typically, the amount of the binder may be 1 wt% or more and 20 wt% or less, 15 wt% or less, 10 wt% or less based on the total weight of solids excluding the solvent in the negative electrode slurry.

The conductive material is a component that further increases the conductivity of the negative electrode active material. The conductive material is not particularly limited as long as it does not cause a chemical change in the battery and has conductivity, and for example, graphite such as natural graphite, artificial graphite or the like; carbon black such as acetylene black, Ketjen black, channel black, furnace black, lamp black, thermal black or the like; a conductive fiber such as carbon fiber, metal fiber or the like; fluorinated carbon powder; a metal powder such as aluminum powder, nickel powder or the like; a conductive whisker such as zinc oxide, potassium titanate or the like; a conductive metal oxide such as titanium oxide or the like; or a conductive material such as a polyphenylene derivative or the like may be used.

The amount of the conductive material may be 1 wt% or more and 20 wt% or less, 15 wt% or less, 10 wt% or less based on the total weight of solids excluding the solvent in the negative electrode slurry.

The solvent may comprise water or an organic solvent such as NMP and may be used in an amount that exhibits preferable viscosity when the negative electrode active material and optionally the binder and the conductive material are comprised. For example, the solvent may be comprised so that the concentration of solids comprising the negative electrode active material and optionally the binder and the conductive material is 50 wt% or more, 60 wt% or more, 70 wt% or more and 95 wt% or less, 90 wt% or less, 85 wt% or less.

When a metal itself is used as the negative electrode, a thin metal film itself may be used or it may be prepared by physically bonding, roll-pressing, or depositing a metal onto the negative electrode current collector. In the deposition, electrodeposition or chemical vapor deposition of a metal may be used.

For example, the thin metal film itself or the metal bonded/roll-pressed/deposited onto the negative electrode current collector may comprise one or more metals selected from lithium (Li), nickel (Ni), tin (Sn), copper (Cu) and indium (In), or an alloy of two or more metals thereof.

### 3) Ion-conducting membrane

The ion-conducting membrane is prepared by the composition for an ion-conducting membrane according to one embodiment of the present invention. Specifically, the ion-conducting membrane may be prepared by crosslinking the composition for an ion-conducting membrane.

The ion-conducting membrane may have a thickness of 0.1 to 1,000.0 µm, preferably 0.1 to 500.0 µm, and more preferably 1.0 to 100.0 µm, but the present invention is not limited thereto. When the above-described condition is satisfied, the ion-conducting membrane can implement excellent energy density.

The ion-conducting membrane may comprise a support to improve mechanical strength.

The support may comprise one or more selected from polyethylene, polypropylene, polyimide, polybenzimidazole, non-woven fabric, cellulose, glass fiber and porous silica.

The support may be a porous film.

The ion-conducting membrane comprising the support may be prepared by impregnating the support with the composition for an ion-conducting membrane according to one embodiment of the present invention and performing crosslinking.

The present invention provides a battery module comprising the all-solid-state battery as a unit cell and a battery pack comprising the battery module. The battery module and battery pack may be used as a power source of medium-to-large-sized devices selected from electric vehicles, hybrid electric vehicles, plug-in hybrid electric vehicles, and energy storage systems by comprising a secondary battery having high capacity, high-rate characteristics and cycle characteristics.

Hereinafter, the present invention will be described in detail with reference to examples. However, examples of the present invention may be modified into several different forms, and the scope of the present invention is not limited to the examples to be described below. The examples of the present invention are provided so that this disclosure will be thorough and complete, and will fully convey the concept of embodiments to those skilled in the art.

### Preparation Example 1

### <Preparation of poly(dichlorophosphazene)>

12 g of hexachlorocyclotriphosphazene, 10 ml of 1,2,4-trichlorobenzene, 25.4 mg of sulfamic acid, and 22.5 mg of CaSO₄·H₂O were input into a first reactor, and the internal atmosphere of the first reactor was purged with nitrogen. Subsequently, the internal temperature of the reactor was raised to 210 °C, and then polymerization was performed for 3 hours. Then, the obtained polymerization product was purified by precipitation in heptane to separate poly(dichlorophosphazene).

### <Preparation of polymer>

4 g of the poly(dichlorophosphazene) was dissolved in 150 ml of anhydrous tetrahydrofuran to prepare a poly(dichlorophosphazene) solution.

Meanwhile, 2.7613 g (0.069 mol) of an NaH solution (NaH concentration: 60 wt%, dispersant: mineral oil) was mixed with 20 ml of tetrahydrofuran to prepare an NaH mixture. 8.2 ml of a mixture comprising allyl alcohol and diethylene glycol monoethyl ether in a molar ratio of 2:8 was mixed with 40 ml of tetrahydrofuran to prepare an alcohol mixture.

The NaH mixture was input into a second reactor (internal temperature: 0 °C), and then the alcohol mixture was input. Subsequently, the internal temperature of the second reactor was raised to 25 °C, and then the NaH mixture and the alcohol mixture were allowed to react for 12 hours to prepare an activated substituent.

The poly(dichlorophosphazene) solution and the activated substituent were sequentially input into a third reactor. Subsequently, the internal temperature of the third reactor was raised to 70 °C, and then substitution was performed for 40 hours to prepare a polymer (weight average molecular weight: 1,000,000 g/mol) comprising a structural unit represented by the following Chemical Formula 1-1-1.

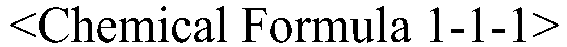

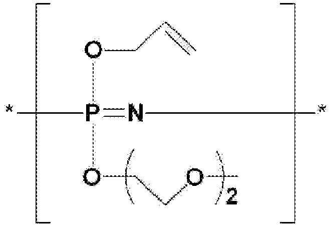

### Preparation Example 2

### <Preparation of poly(dichlorophosphazene)>

Poly(dichlorophosphazene) was prepared in the same manner as in Preparation Example 1.

### <Preparation of polymer>

4 g of the poly(dichlorophosphazene) was dissolved in 150 ml of anhydrous tetrahydrofuran to prepare a poly(dichlorophosphazene) solution.

Meanwhile, 2.7613 g (0.069 mol) of an NaH solution (NaH concentration: 60 wt%, dispersant: mineral oil) was mixed with 20 ml of tetrahydrofuran to prepare an NaH mixture. 15.2 ml of a mixture comprising allyl alcohol, diethylene glycol monoethyl ether and methoxypolyethylene glycol 350 (weight average molecular weight: 350 g/mol) in a molar ratio of 2:4:4 was mixed with 40 ml of tetrahydrofuran to prepare an alcohol mixture.

The NaH mixture was input into a second reactor (internal temperature: 0 °C), and then the alcohol mixture was input. Subsequently, the internal temperature of the second reactor was raised to 25 °C, and then the NaH mixture and the alcohol mixture were allowed to react for 12 hours to prepare an activated substituent.

The poly(dichlorophosphazene) solution and the activated substituent were sequentially input into a third reactor. Subsequently, the internal temperature of the third reactor was raised to 70 °C, and then substitution was performed for 40 hours to prepare a polymer (weight average molecular weight: 300,000 g/mol) comprising a structural unit represented by the following Chemical Formula 1-2-1 and a structural unit represented by the following Chemical Formula 1-2-2.

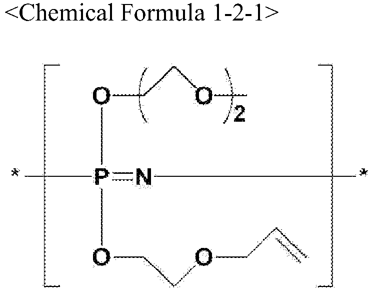

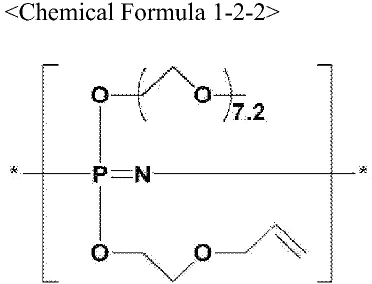

### Preparation Example 3

### <Preparation of compound represented by Chemical Formula 2-1>

### Step 1

15.0 g (0.061 mol) of potassium 3-(methacryloyloxy)propane-1-sulfonate was suspended in 25 ml of anhydrous tetrahydrofuran under an inert atmosphere. In this case, 1.7 ml of dimethylformamide was injected as a catalyst using a syringe. Afterward, the reaction flask was cooled to 0 °C, and 39.9 g (0.335 mol) of thionyl chloride was injected while stirring. The reaction was performed at 0 °C for 1 hour and then additionally performed at 25 °C for 12 hours.

The resulting suspension was slowly poured into 200 ml of ice water to remove the reactivity of thionyl chloride. The upper aqueous layer was decanted, and the lower organic oil layer was diluted with 80 ml of dichloromethane. Subsequently, the resulting solution was washed 6 times with 25 ml of water at a time and then dried with anhydrous magnesium sulfate. The magnesium sulfate was removed by filtration, the dichloromethane was evaporated under reduced pressure, and additional vacuum drying was performed to obtain trifluoromethanesulfonamide.

### Step 2

7.3 g (0.049 mol) of the trifluoromethanesulfonamide was input into a reactor, the reactor was purged with nitrogen, and 10.9 g (0.107 mol) of anhydrous triethylamine was added while stirring. The resulting mixture was diluted with 40 ml of anhydrous tetrahydrofuran, and the diluted solution was cooled to 0 °C under an inert atmosphere. 11.1 g (0.049 mol) of 3-(chlorosulfonyl)propyl methacrylate was dissolved in 15 ml of anhydrous tetrahydrofuran to prepare a mixed solution. The mixed solution was added to the diluted solution and then allowed to react at 0 °C for 1 hour and additionally react at 25 °C for 1 hour. After completion of the reaction, the produced precipitate was removed by filtration, and the filtrate was evaporated. The obtained pale-yellow oil was re-dissolved in 90 ml of dichloromethane, washed 4 times with 35 ml of water at a time, and dried with anhydrous magnesium sulfate. The magnesium sulfate was filtered from the dried material, the dichloromethane was evaporated under reduced pressure, and additional vacuum drying was performed to obtain triethylammonium 1-[3-(methacryloyloxy)propylsulfonyl]-1-(trifluoromethanesulfonyl)imide.

### Step 3

20.0 g (45 mmol) of the triethylammonium 1-[3-(methacryloyloxy)propylsulfonyl]-1-(trifluoromethanesulfonyl)imide was dissolved in 60 ml of anhydrous tetrahydrofuran at 25 °C under a nitrogen atmosphere while stirring. To the resulting solution, 0.76 g (91 mmol) of LiH was added at one time, and the obtained suspension was stirred at 30 °C overnight. Subsequently, unreacted LiH was removed by filtration, and the resulting solution was concentrated under reduced pressure to obtain a yellow viscous oil. The yellow viscous oil was washed 3 times with 40 ml of hexane at a time, then dried under reduced pressure, and recrystallized with anhydrous dichloromethane to obtain white crystalline powder. Afterward, the powder was collected by filtration and dried under vacuum to obtain a final product, a compound represented by Chemical Formula 2-1.

### Preparation Example 4

### <Preparation of compound represented by Chemical Formula 4-1-1>

5.0 g (0.034 mol) of 2,5-dimethylhexane-2,5-diol and 3.8 ml (0.034 mol) of trimethyl borate were dissolved in 50 mL of anhydrous acetonitrile and then stirred under N₂ purging at 65 °C for 1 hour. Subsequently, 12 g (0.034 mol) of poly(ethylene glycol) methacrylate (number average molecular weight: 500 g/mol) was added to the resulting solution and allowed to react at 65 °C for 3 hours while stirring. After completion of the reaction, the residual solvent was removed by evaporation under reduced pressure. The product was dissolved in toluene, then an insoluble portion was removed by filtration, and the toluene was removed under reduced pressure at 60 °C. Vacuum drying was performed at 25 °C for 24 hours to obtain PEGMA containing a boronic ester group (a compound represented by the following Chemical Formula 4-1-1). The obtained product was stored in a vacuum oven to prevent contact with moisture that may induce hydrolysis.

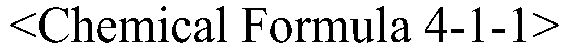

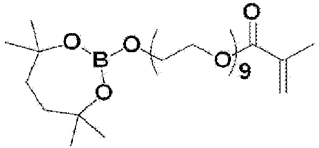

### Examples and Comparative Examples

### <Preparation of composition for ion-conducting membrane>

According to the components and contents shown in Tables 1 and 2 below, the polymer prepared in Preparation Example 1, the polymer prepared in Preparation Example 2, the compound represented by Chemical Formula 2-1 prepared in Preparation Example 3, a compound represented by Chemical Formula 3-2 (commercially available from TCI), the compound represented by Chemical Formula 4-1-1 prepared in Preparation Example 4, poly(ethylene glycol) dimethacrylate, and poly(ethylene glycol) methacrylate were mixed to prepare a composition for an ion-conducting membrane.

### <Preparation of ion-conducting membrane>

The composition for an ion-conducting membrane was dissolved at a concentration of 10 wt% in ethylene glycol dimethyl ether. Subsequently, with respect to 100 parts by weight of the composition for an ion-conducting membrane comprised in the resulting solution, 3.00 parts by weight of azobisisobutyronitrile was added to prepare a polymer solution. 1 ml of the polymer solution was applied on a glass substrate (2.5 cm×2.5 cm) by solution casting. The solvent was removed by vacuum drying at room temperature, and crosslinking was performed in a vacuum oven set to 70 °C to prepare an ion-conducting membrane.

Meanwhile, even when the glass substrate is changed to a PET release film, an ion-conducting membrane can be prepared in the same manner.

### <Preparation of battery>

The ion-conducting membrane was separated from the glass substrate, then cut using a 19 mm puncher, and dried in a vacuum oven set to 60 °C for 2 days. The thickness of the ion-conducting membrane was 150 µm, and a coin cell was prepared using the resulting ion-conducting membrane according to CR2032 specifications.

### Experimental Example 1

### <Preparation and measurement of cell for measuring ionic conductivity>

Each ion-conducting membrane of the examples and comparative examples was located between two stainless steel electrodes to prepare a sample for measurement. Ionic conductivity was measured by complex impedance spectroscopy in the range of 10 to 100 °C using a Zahner Elektrik IM6 instrument at a temperature of 25 °C, a voltage of 10 mV, and a frequency of 0.1 Hz to 1.0 MHz. The ionic conductivity of the ion-conducting membrane was calculated using the real part of impedance at the minimum value of the imaginary part as resistance. Ionic conductivity (σ) was calculated by substituting the electrolyte resistance (R), ion-conducting membrane thickness (d), and electrode area (A) obtained from the impedance spectrum into the following equation.$Ionic conductivity \left(σ\right) = \left(1/R\right) \times \left(d/A\right)$

In the present invention, when an ionic conductivity was 1.0E-06 S/cm or more, it was evaluated that ionic conductivity was excellent.

### Experimental Example 2

### <Preparation and measurement of cell for measuring lithium ion transference number>

Each ion-conducting membrane of the examples and comparative examples was located between two lithium electrodes to prepare a Li symmetric cell which is a sample for measurement. The lithium ion transference number was measured by electrochemical impedance spectroscopy (EIS) and the Bruce-Vincent method using DC polarization. The Li symmetric cell was polarized at a constant DC voltage of 10 mV, and the steady-state current was recorded. Also, the initial impedance and steady-state impedance of the cell were measured by EIS, and the lithium cation transference number was calculated using the following equation.$Lithium ion transference number \left({tLi}^{+}\right) = iss \left(V-i0R0\right) / i 0 \left(V-issRss\right)$
V: Constant voltage applied to cell
i0: Initial-state current
iss: Steady-state current
R0: Initial-state interfacial resistance
Rss: Steady-state interfacial resistance

In the present invention, when the lithium ion transference number was 0.4 or more, it was evaluated that the lithium ion transference number was excellent.

### Experimental Example 3

When each ion-conducting membrane of the examples and comparative examples was separated from the glass substrate, whether self-standing was possible or not was evaluated, and results thereof are shown in Tables 1 and 2 below.
×: The ion-conducting membrane was not able to be separated from the glass substrate.
△: The ion-conducting membrane was able to be separated from the glass substrate, but was wrinkled or torn.
○: The ion-conducting membrane was able to be separated from the glass substrate and was relatively uniform and rigid.

**[Table 1]**

| Classification | | Example 1 | Example 2 | Example 3 | Example 4 | Example 5 |
|---|---|---|---|---|---|---|
| Composition for ion-conducting membrane (parts by weight) | Polymer prepared in Preparation Example 1 | 80.00 | 90.00 | 90.00 | 00.00 | 90.00 |
| | Polymer prepared in Preparation Example 2 | 0.00 | 0.00 | 0.00 | 90.00 | 0.00 |
| | Compound represented by Chemical Formula 2-1 | 20.00 | 10.00 | 10.00 | 10.00 | 10.00 |
| | Compound represented by Chemical Formula 3-2 | 4.00 | 15.00 | 24.00 | 30.00 | 22.00 |
| | Compound represented by Chemical Formula 4-1-1 | 0.00 | 0.00 | 20.00 | 20.00 | 0.00 |
| | Poly(ethylene glycol) dimethacrylate | 0.00 | 0.00 | 0.00 | 0.00 | 20.00 |
| Ionic conductivity (S/cm, 25 °C) | | 1.9E-06 | 1.8E-05 | 3.0E-05 | 2.0E-05 | 2.0E-05 |
| Lithium ion transference number | | 0.7 | 0.6 | 0.6 | 0.7 | 0.7 |
| Self-standing | | ○ | ○ | ○ | ○ | ○ |

**[Table 2]**

| Classification | | Comparative Example 1 | Comparative Example 2 | Comparative Example 3 | Comparative Example 4 |
|---|---|---|---|---|---|
| Composition for ion-conducting membrane (parts by weight) | Polymer prepared in Preparation Example 1 | 90.00 | 0.00 | 75.00 | 95.00 |
| | Polymer prepared in Preparation Example 2 | 0.00 | 70.00 | 0.00 | 0.00 |
| | Compound represented by Chemical Formula 2-1 | 10.00 | 30.00 | 25.00 | 5.00 |
| | Compound represented by Chemical Formula 3-2 | 0.00 | 0.00 | 0.00 | 20.11 |
| | Compound represented by Chemical Formula 4-1-1 | 0.00 | 0.00 | 0.00 | 0.00 |
| | Poly(ethylene glycol) dimethacrylate | 0.00 | 0.00 | 0.00 | 0.00 |
| | Poly(ethylene glycol) methacrylate | 0.00 | 0.00 | 0.00 | 0.00 |
| Ionic conductivity (S/cm, 25 °C) | | 5.9E-07 | 3.0E-08 | 1.3E-07 | - |
| Lithium ion transference number | | 0.8 | 0.8 | - | - |
| Self-standing | | △ | △ | ○ | × |

Referring to Tables 1 and 2, in the case of Examples 1 and 2 using the composition for an ion-conducting membrane comprising all of the polymer comprising the structural unit represented by Chemical Formula 1, the compound represented by Chemical Formula 2, and the compound represented by Chemical Formula 3, ionic conductivity and the lithium ion transference number were excellent, and self-standing was also possible. Also, in the case of Examples 3 and 4 using the composition for an ion-conducting membrane comprising all of the polymer comprising the structural unit represented by Chemical Formula 1, the compound represented by Chemical Formula 2, the compound represented by Chemical Formula 3, and the compound represented by Chemical Formula 4, ionic conductivity and the lithium ion transference number were excellent, and self-standing was also possible.

In addition, in the case of Example 5 using the composition for an ion-conducting membrane comprising all of the polymer comprising the structural unit represented by Chemical Formula 1, the compound represented by Chemical Formula 2, the compound represented by Chemical Formula 3, and the crosslinking agent, ionic conductivity and the lithium ion transference number were excellent, and self-standing was also possible.

However, in the case of Comparative Examples 1 and 2 using the composition for an ion-conducting membrane not comprising the compound represented by Chemical Formula 3, ionic conductivity was significantly degraded.

In the case of Comparative Example 3 using the composition for an ion-conducting membrane comprising 75.00 parts by weight of the polymer comprising the structural unit represented by Chemical Formula 1, ionic conductivity was significantly low.

In the case of Comparative Example 4, self-standing was not possible. Also, ionic conductivity could not be measured due to poor mechanical properties.

## Claims

1. A composition for an ion-conducting membrane, comprising:
a polymer comprising a structural unit represented by the following Chemical Formula 1;
a compound represented by the following Chemical Formula 2; and
a lithium salt compound,
wherein the composition comprises the polymer in an amount of 80.00 to 90.00 parts by weight with respect to 100 parts by weight of the sum of the polymer and the compound represented by Chemical Formula 2: 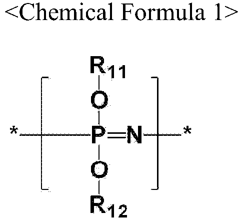 in Chemical Formula 1,
R₁₁ and R₁₂ are each independently hydrogen, a halogen, *-CN, *-OH, a halogen-substituted or unsubstituted C₁ to C₂₀ alkyl group, a C₂ to C₂₀ alkenyl group, a C₂ to C₂₀ alkynyl group, *-L₁₁-X₁₁-L₁₂-(-L₁₃-O-)n₁₁-R₁₃ or *-(L₁₄-X₁₂-)n₁₂-L₁₅-CH=CH₂,
L₁₁ to L₁₅ are each independently a direct bond, a C₁ to C₂₀ alkylene group, a C₂ to C₂₀ alkenylene group, or a C₂ to C₂₀ alkynylene group,
X₁₁ and X₁₂ are each independently a direct bond or *-O-*,
R₁₃ is hydrogen or a C₁ to C₂₀ alkyl group, and
n₁₁ and n₁₂ are each independently selected from 1.0 to 30.0; 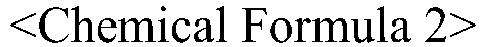 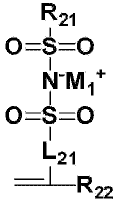 in Chemical Formula 2,
M₁ is an alkali metal,
L₂₁ is a direct bond, a C₁ to C₂₀ alkylene group, a C₂ to C₂₀ alkenylene group, a C₂ to C₂₀ alkynylene group, a C₆ to C₂₀ arylene group, or *-L₂₂-O-C(=O)-*,
L₂₂ is a direct bond, a C₁ to C₂₀ alkylene group, a C₂ to C₂₀ alkenylene group, a C₂ to C₂₀ alkynylene group, or a C₆ to C₂₀ arylene group, and
R₂₁ and R₂₂ are each independently, hydrogen, a halogen, *-CN, *-OH, a halogen-substituted or unsubstituted C₁ to C₂₀ alkyl group, a C₂ to C₂₀ alkenyl group, or a C₂ to C₂₀ alkynyl group.

2. The composition for an ion-conducting membrane of claim 1, wherein the structural unit represented by Chemical Formula 1 comprises one or more structural units selected from structural units represented by the following Chemical Formulas 1-1 to 1-8: 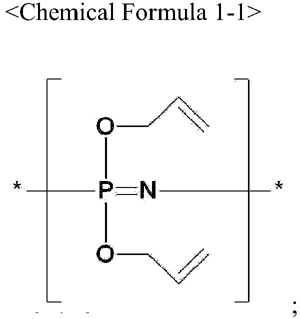 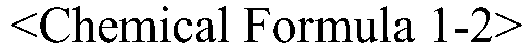 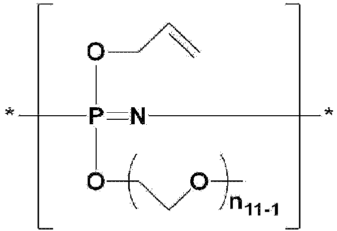 in Chemical Formula 1-2,
n₁₁₋₁ is selected from 1.0 to 30.0; 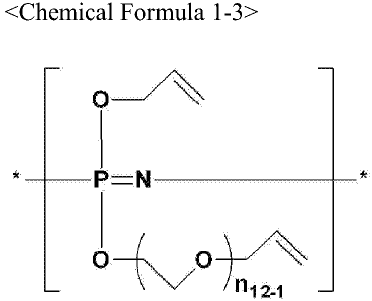 in Chemical Formula 1-3,
n₁₂₋₁ is selected from 1.0 to 30.0; 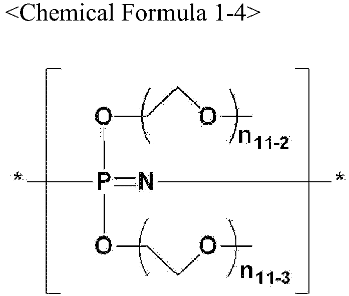 in Chemical Formula 1-4,
n₁₁₋₂ and n₁₁₋₃ are each independently selected from 1.0 to 30.0; 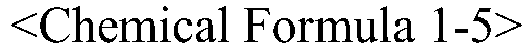 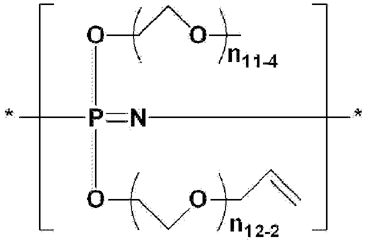 in Chemical Formula 1-5,
n₁₁₋₄ and n₁₂₋₂ are each independently selected from 1.0 to 30.0; 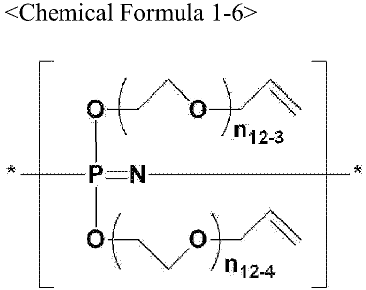 in Chemical Formula 1-6,
n₁₂₋₃ and n₁₂₋₄ are each independently selected from 1.0 to 30.0; 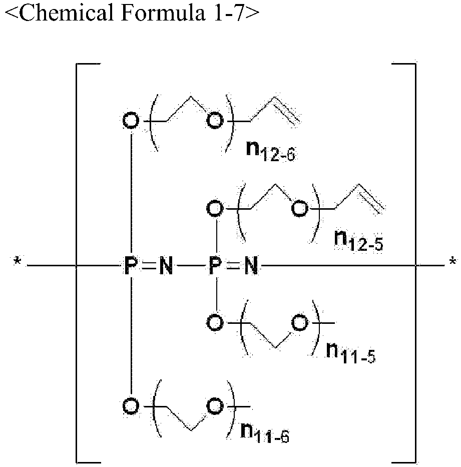 in Chemical Formula 1-7,
n₁₁₋₅, n₁₁₋₆, n₁₂₋₅ and n₁₂₋₆ are each independently selected from 1.0 to 30.0; 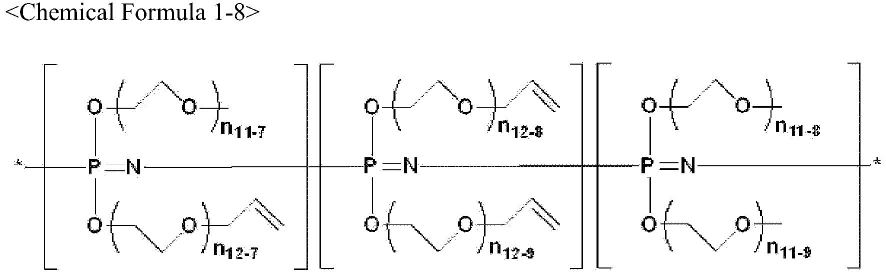 in Chemical Formula 1-8,
n₁₁₋₇, n₁₁₋₈, n₁₁₋₉, n₁₂₋₇, n₁₂₋₈ and n₁₂₋₉ are each independently selected from 1.0 to 30.0.

3. The composition for an ion-conducting membrane of claim 1, wherein the polymer has a weight average molecular weight of 1,000 to 10,000,000 g/mol.

4. The composition for an ion-conducting membrane of claim 1, wherein the compound represented by Chemical Formula 2 is selected from compounds represented by the following Chemical Formulas 2-1 and 2-2:

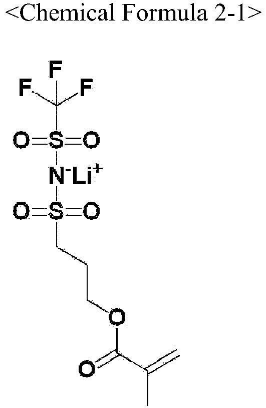

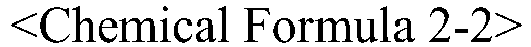

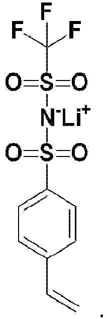

5. The composition for an ion-conducting membrane of claim 1, wherein the lithium salt compound comprises one or more selected from a compound represented by the following Chemical Formula 3, lithium hexafluorophosphate, lithium tetrafluoroborate and lithium bis(oxalato)borate: 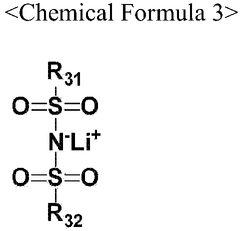 in Chemical Formula 3,
R₃₁ and R₃₂ are each independently hydrogen, a halogen, *-CN, *-OH, a halogen-substituted or unsubstituted C₁ to C₂₀ alkyl group, a C₂ to C₂₀ alkenyl group, or a C₂ to C₂₀ alkynyl group.

6. The composition for an ion-conducting membrane of claim 5, wherein the compound represented by Chemical Formula 3 comprises one or more selected from compounds represented by the following Chemical Formulas 3-1 and 3-2:

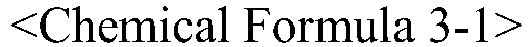

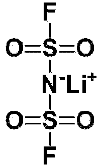

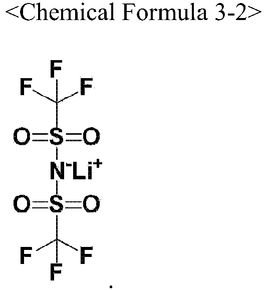

7. The composition for an ion-conducting membrane of claim 1, comprising the lithium salt compound in an amount of 1.00 to 60.00 parts by weight with respect to 100 parts by weight of the sum of the polymer and the compound represented by Chemical Formula 2.

8. The composition for an ion-conducting membrane of claim 1, further comprising a compound represented by the following Chemical Formula 4: 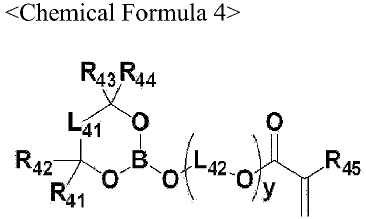 in Chemical Formula 4,
L₄₁ and L₄₂ are each independently a direct bond, a C₁ to C₂₀ alkylene group, a C₂ to C₂₀ alkenylene group, or a C₂ to C₂₀ alkynylene group,
R₄₁ to R₄₅ are each independently hydrogen, a halogen, *-CN, *-OH, a halogensubstituted or unsubstituted C₁ to C₂₀ alkyl group, a C₂ to C₂₀ alkenyl group, or a C₂ to C₂₀ alkynyl group, and
y is selected from 1.0 to 30.0.

9. The composition for an ion-conducting membrane of claim 8, wherein the compound represented by Chemical Formula 4 is a compound represented by the following Chemical Formula 4-1: 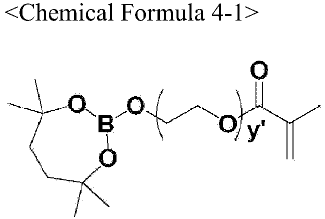 in Chemical Formula 4-1,
y' is selected from 1.0 to 30.0.

10. The composition for an ion-conducting membrane of claim 8, comprising the compound represented by Chemical Formula 4 in an amount of 1.00 to 35.00 parts by weight with respect to 100 parts by weight of the sum of the polymer and the compound represented by Chemical Formula 2.

11. The composition for an ion-conducting membrane of claim 1, further comprising a crosslinking agent.

12. The composition for an ion-conducting membrane of claim 11, wherein the crosslinking agent comprises one or more selected from poly(ethylene glycol) diacrylate, poly(ethylene glycol) methacrylate, poly(ethylene glycol) methyl ether methacrylate, poly(ethylene glycol) dimethacrylate, trimethylolpropane triacrylate, trimethylolpropane ethoxylate triacrylate and pentaerythritol tetraacrylate.

13. The composition for an ion-conducting membrane of claim 11, comprising the crosslinking agent in an amount of 0.50 to 50.00 parts by weight with respect to 100 parts by weight of the sum of the polymer and the compound represented by Chemical Formula 2.

14. A battery comprising an ion-conducting membrane prepared by the composition for an ion-conducting membrane according to claim 1.
